# EUROPEAN PATENT SPECIFICATION

(11) **EP 4 534 367 B1**
(45) Date of publication and mention of the grant of the patent: **21.10.2026**
(21) Application number: 24204620.9
(22) Date of filing: 04.10.2024
(51) Int. Cl.: B60T 7/20, B60T 8/17, B60T 13/66

(54) **IMPROVED HYDRAULIC ARRANGEMENT FOR A TRACTOR-TRAILER SYSTEM**
VERBESSERTE HYDRAULISCHE ANORDNUNG FÜR EIN TRAKTOR-ANHÄNGER-SYSTEM
AGENCEMENT HYDRAULIQUE AMÉLIORÉ POUR SYSTÈME TRACTEUR-REMORQUE

(30) Priority: 04.10.2023 IT 202300020496
(43) Date of publication of application: 09.04.2025
(73) Proprietor: CNH Industrial Italia S.p.A., 10156 Torino (IT)
(72) Inventor: Lucente, Aldo, 10156 Turin (IT); Crea, Domenico, 10156 Turin (IT); Terzi, Stefano, 10156 Turin (IT); Bini, Francesco, 10156 Turin (IT)
(74) Representative: CNH Industrial IP Department

(56) References cited:
- WO-A1-2020/200347
- WO-A1-2022/023048
- WO-A1-2022/130077
- DE-A1- 102009 050 793

## Description

### TECHNICAL FIELD

The present invention concerns a hydraulic arrangement, in particular a hydraulic arrangement for a tractor-trailer system.

### BACKGROUND OF THE INVENTION

As is known, a tractor can be used to tow a trailer, which can be of any type and weight depending on the power of the tractor's engine. The tractor and the trailer towed by the tractor jointly define a so-called "tractor-trailer system" as shown for example in WO2022/023048A2 and WO2020/200347A1.

Braking of the tractor-trailer system may lead, in some conditions, to a plurality of dangerous phenomena, e.g. on downhill, on ice, in case of hydraulic system failure, or in case of improper braking. One of these phenomena is the so-called "jack-knife", wherein the braking of the tractor-trailer system is not adequate to brake the trailer, which thus pushes against the tractor until they close together around the towing swivel like a pocket knife closure.

In order to solve such problem, it is known to provide a so-called "intelligent trailer brake valve" which is configured to control the braking of the trailer so as to avoid the jack-knife phenomenon.

Such intelligent trailer brake valves are pneumatic valves which allow, in some conditions, the control of trailer brake predominantly over user's control via tractor pedals. This is necessary to control the deceleration of the trailer so as to avoid the jack-knife phenomenon.

However, such intelligent trailer brake valves need a dedicated pneumatic control circuit and a dedicated electronic control system, thus they are costly and the related pneumatic systems are bulky. Furthermore, not all vehicles are provided with pneumatic systems.

Known hydraulic arrangements try to solve the problem via a trailer brake valve and a safety valve. The safety valve integrates a so-called "advance valve", i.e. an ON/OFF valve which merely gives an initial impulse so as to anticipate braking of the trailer.

The trailer brake valve and the safety valve with the integrated advance valve must be hydraulically designed so as to provide predetermined characteristics, thus they depend on the type of tractor-trailer system.

Furthermore, the known hydraulic arrangements do not allow the trailer to be braked during autonomous driving.

Therefore, the need is felt to improve known hydraulic arrangements for tractor-trailer systems.

An aim of the present invention is to satisfy the above-mentioned need in a cost-effective and optimised manner.

### SUMMARY OF THE INVENTION

The aforementioned aim is reached by a hydraulic arrangement as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic scheme of a hydraulic arrangement according to an embodiment of the present invention;
- Figure 2 is a hydraulic scheme of a hydraulic arrangement according to an embodiment of the present invention;
- Figure 3 is a hydraulic scheme of a hydraulic arrangement according to an embodiment of the present invention; and
- Figure 4 is a hydraulic scheme of a hydraulic arrangement according to an embodiment of the present invention.

### DETAILED DESCRIPTION OF THE INVENTION

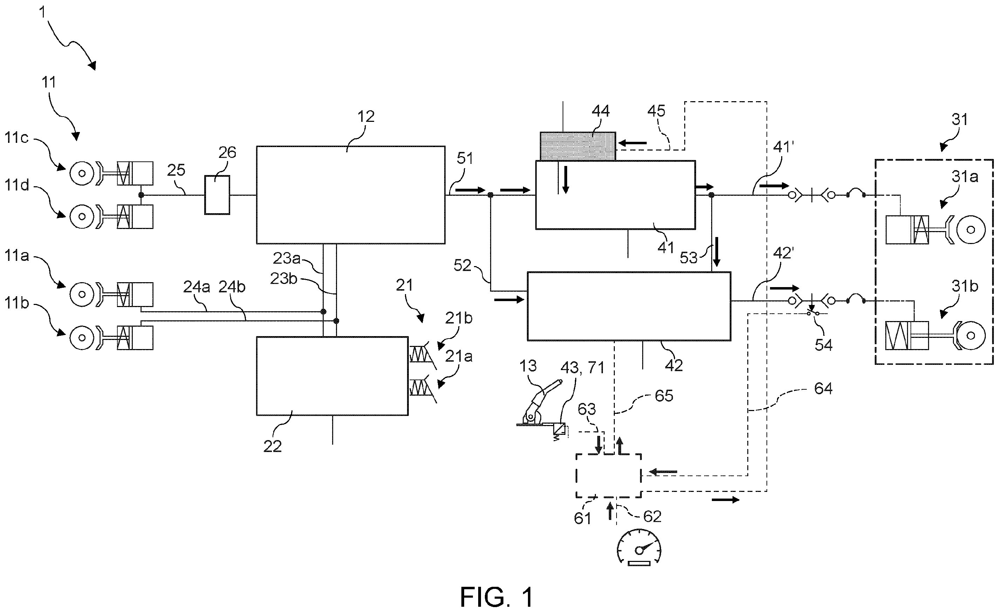

Each of figures 1 to 4 illustrates a hydraulic arrangement 1 for a tractor-trailer system according to a respective embodiment of the present invention.

The tractor-trailer system comprises a tractor and a trailer.

The tractor comprises tractor brakes 11, a tractor brake valve 12 of the tractor brakes 11, and a secondary brake lever 13.

Conveniently, the tractor brakes 11 are service brakes.

In particular, the tractor brakes 11 comprise a rear left brake 11a, a rear right brake 11b, a front left brake 11c and a front right brake 11d.

Preferably, the secondary brake lever 13 is a dedicated lever configured to stop the tractor-trailer system when actuated. For example, the secondary brake lever 13 is a parking lever, e.g. a hand brake, and/or an emergency lever.

Conveniently, the hydraulic arrangement 1 comprises brake pedals 21 configured to actuate the tractor brakes 11.

In particular, the brake pedals 21 comprise a left brake pedal 21a and a right brake pedal 21b fluidically connected to, respectively, the rear left brake 11a and the rear right brake 11b via a hydraulic brake valve 22.

Preferably, the hydraulic brake valve 22 is configured to selectively provide pressure to the rear brakes, i.e. the rear left brake 11a and the rear right brake 11b, e.g. on the basis of an actuation of the brake pedals 21, i.e. the left brake pedal 21a and the right brake pedal 21b.

Conveniently, the tractor brake valve 12 is fluidically downstream of the hydraulic brake valve 22 and fluidically connected thereto via a rear-left-brake conduit 23a and a rear-right-brake conduit 23b. The rear-left-brake conduit 23a is fluidically connected to the rear left brake 11a, via a conduit 24a, and the rear-right-brake conduit 23b is fluidically connected to the rear right brake 11b, via a conduit 24b.

Preferably, the tractor brake valve 12 is fluidically interposed between the hydraulic brake valve 22 and the front brakes, i.e. the front left brake 11c and the front right brake 11d.

Conveniently, the front brakes, i.e. the front left brake 11c and the front right brake 11d, are fluidically downstream of the tractor brake valve 12 and fluidically connected thereto via a front-brake conduit 25.

Optionally, an electro-actuated valve 26 is fluidically interposed between the tractor brake valve 12 and the front brakes, i.e. the front left brake 11c and the front right brake 11d.

Preferably, the tractor brake valve 12 is configured to selectively provide pressure to the front brakes, i.e. the front left brake 11c and the front right brake 11d, e.g. on the basis of the tractor speed and/or the trailer speed.

The trailer comprises trailer brakes 31 configured to brake the trailer.

In particular, the trailer comprises first trailer brakes 31a and second trailer brakes 31b.

The hydraulic arrangement 1 comprises:
- a trailer brake valve 41 fluidically interposed between the tractor brake valve 12 and a control line 41' of the trailer brakes 31, in particular of the first trailer brakes 31a;
- a safety valve 42 fluidically interposed between the tractor brake valve 12 and a supplementary line 42' of the trailer brakes 31, in particular of the second trailer brakes 31b;
- sensor means 43 configured to generate at least one output indicative of a physical quantity dependent on an actuation of at least one of the secondary brake lever 13 and the tractor brakes 11; and
- a proportional valve 44 configured to proportionally actuate the trailer brake valve 41 on the basis of a control signal 45 dependent on the at least one output of the sensor means 43.

Conveniently, the trailer brake valve 41 is configured to selectively provide pressure to the control line 41' so as to actuate the first trailer brakes 31a.

In particular, the trailer brake valve 41 is fluidically downstream of the tractor brake valve 12 and fluidically connected thereto via a conduit 51. The first trailer brakes 31a are fluidically downstream of the trailer brake valve 41 and fluidically connected thereto via the control line 41'.

Conveniently, the safety valve 42 is configured to selectively provide pressure to the supplementary line 42' so as to actuate the second trailer brakes 31b.

In particular, the safety valve 42 is fluidically downstream of the tractor brake valve 12 and fluidically connected thereto via a conduit 52 branching off from the conduit 51. The second trailer brakes 31b are fluidically downstream of the safety valve 42 and fluidically connected thereto via the supplementary line 42'.

Conveniently, the safety valve 42 is fluidically connected to the trailer brake valve 41 via a conduit 53 branching off from the control line 41'.

Preferably, the hydraulic arrangement 1 comprises a switch 54 interposed between the safety valve 42 and the trailer brakes 31, in particular the second trailer brakes 31b.

Conveniently, the at least one output of the sensor means 43 depends on the actuation of the secondary brake lever 13 and/or the tractor brakes 11, as described in detail hereinafter. The actuation of the secondary brake lever 13 and/or the tractor brakes 11 may be automatic, as is the case in autonomous driving.

Conveniently, the proportional valve 44 is fluidically upstream of the trailer brake valve 41 and is external thereto or integrated therein.

According to non-illustrated embodiments, which are not part of the invention, the proportional valve 44 is hydraulically actuated, i.e. the control signal 45 is a hydraulic signal, and/or pneumatically actuated, i.e. the control signal 45 is a pneumatic signal.

According to the invention, the proportional valve 44 is an electro-actuated valve, and the hydraulic arrangement 1 comprises an electronic control unit 61 configured to provide the control signal 45 to the electro-actuated valve 44 so as to control an output pressure of the trailer brake valve 41.

In particular, the control signal 45 is an electrical signal provided by the electronic control unit 61 to the electro-actuated valve 44. The control signal 45 is configured to actuate the electro-actuated valve 44 so as to control the pressure of the control line 41' of the trailer brakes 31, in particular of the first trailer brakes 31a.

Conveniently, the electronic control unit 61 is configured to receive a signal 62 indicative of the rotational speed of the engine of the tractor. Conveniently, the signal 62 is an electrical signal.

Conveniently, the electronic control unit 61 is configured to receive a signal 63 from the secondary brake lever 13. The signal 63 is indicative of an actuation of the secondary brake lever 13. Conveniently, the signal 63 is an electrical signal.

Conveniently, the electronic control unit 61 is configured to receive a signal 64 from the switch 54. The signal 64 is indicative of a status of the supplementary line 42'. Conveniently, the signal 64 is an electrical signal.

Conveniently, the electronic control unit 61 is configured to provide a signal 65 to the safety valve 42. The signal 65 is configured to actuate the safety valve 42. Conveniently, the signal 65 is an electrical signal.

Preferably, the sensor means 43 comprise a proportional sensor 71 configured to generate an output indicative of an amount of actuation of the secondary brake lever 13.

In particular, the output of the proportional sensor 71 is indicative of a percentage, i.e. 0% to 100%, of actuation of the secondary brake lever 13.

Conveniently, the output of the proportional sensor 71 is the signal 63, which is received by the electronic control unit 61.

Preferably, the proportional sensor 71 is a potentiometer.

According to an embodiment (figure 1), the sensor means 43 do not comprise pressure sensors configured to generate respective outputs indicative of the respective output pressure of the trailer brake valve 41 or the tractor brake valve 12. In other words, there are no pressure sensors either fluidically upstream or downstream of the trailer brake valve 41.

In particular, there is neither a pressure sensor configured to detect the output pressure of the trailer brake valve 41, i.e. the pressure of the control line 41' and the conduit 53, nor a pressure sensor configured to detect the output pressure of the tractor brake valve 12, i.e. the pressure of the conduit 51 and the conduit 52.

According to an embodiment, the electronic control unit 61 is configured to receive the output of the proportional sensor 71, indicative of an amount of actuation of the secondary brake lever 13, and to control the output pressure of the trailer brake valve 41, via open-loop control, on the basis of the output of the proportional sensor 71.

In particular, the output pressure of the tractor brake valve 12 is unknown, because it is not detected by a dedicated pressure sensor, and the output pressure of the trailer brake valve 41 is unknown, because it is not detected by a dedicated pressure sensor. The electronic control unit 61 is configured to implement open-loop control because the quantity to be controlled, i.e. the output pressure of the trailer brake valve 41, is not known due to lack of a dedicated sensor. However, the output pressure of the trailer brake valve 41 can be estimated by maps. Therefore, proportional control can be performed via mapped control.

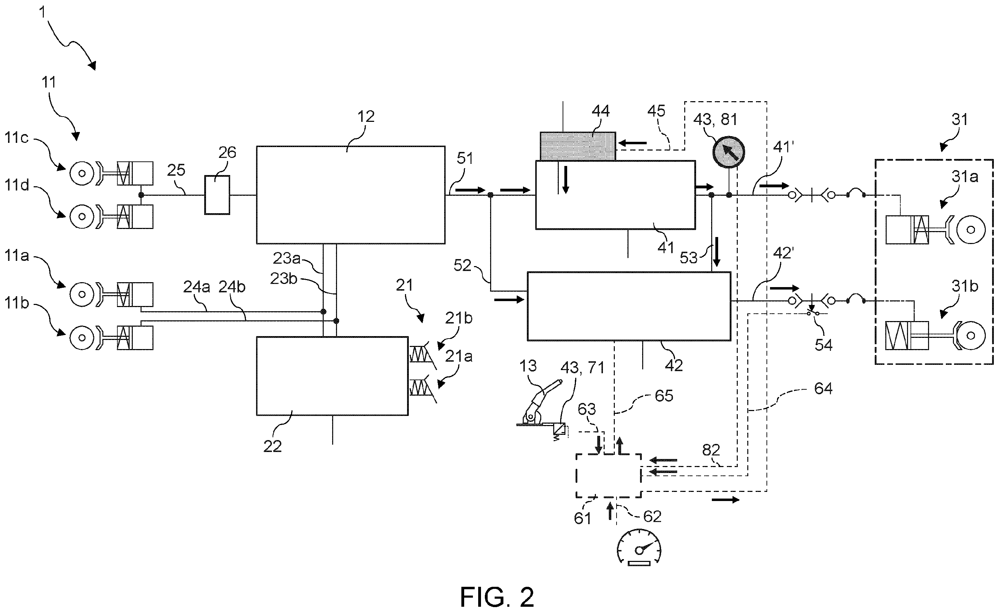

According to an embodiment (figure 2), the sensor means 43 comprise a first pressure sensor 81 configured to generate an output indicative of the output pressure of the trailer brake valve 41.

In particular, the first pressure sensor 81 is configured to detect the output pressure of the trailer brake valve 41, i.e. the pressure of the control line 41' and the conduit 53.

Conveniently, the output of the first pressure sensor 81 is a signal 82, which is received by the electronic control unit 61.

The electronic control unit 61 is configured to receive the output of the first pressure sensor 81 and to control the output pressure of the trailer brake valve 41, via closed-loop control, on the basis of the output of the first pressure sensor 81.

In particular, the output pressure of the tractor brake valve 12 is unknown, because it is not detected by a dedicated pressure sensor, and the output pressure of the trailer brake valve 41 is known, because it is detected by the first pressure sensor 81. The electronic control unit 61 is configured to implement closed-loop control because the quantity to be controlled, i.e. the output pressure of the trailer brake valve 41, is known due to the first pressure sensor 81. Therefore, proportional control can be performed via closed-loop control.

The tractor brake valve 12 and the electro-actuated valve 44 are fluidically connected in series.

In particular, the trailer brake valve 41 has a series architecture. According to the hydraulic series law, the trailer brake valve 41 is hydraulically actuated by mainly the greater of the output pressure of the tractor brake valve 12 and an output pressure of the electro-actuated valve 44. If the output pressure of the tractor brake valve 12 is greater than the output pressure of the electro-actuated valve 44, the trailer brake valve 41 is hydraulically actuated by the output pressure of the tractor brake valve 12, otherwise the trailer brake valve 41 is hydraulically actuated by the output pressure of the electro-actuated valve 44.

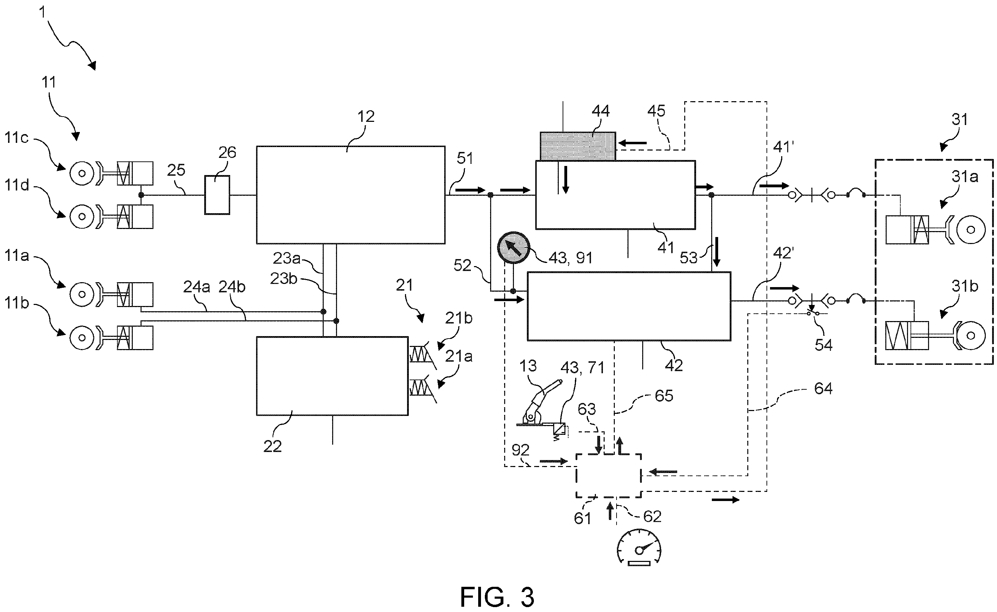

According to an embodiment (figure 3), the sensor means 43 comprise a second pressure sensor 91 configured to generate an output indicative of an output pressure of the tractor brake valve 12.

In particular, the second pressure sensor 91 is configured to detect the output pressure of the tractor brake valve 12, i.e. the pressure of the conduit 51 and the conduit 52.

Conveniently, the output of the second pressure sensor 91 is a signal 92, which is received by the electronic control unit 61.

The electronic control unit 61 is configured to receive the output of the second pressure sensor 91 and to control the output pressure of the trailer brake valve 41, via open-loop control, on the basis of the output of the second pressure sensor 91.

In particular, the output pressure of the tractor brake valve 12 is known, because it is detected by the second pressure sensor 91, and the output pressure of the trailer brake valve 41 is unknown, because it is not detected by a dedicated pressure sensor. The electronic control unit 61 is configured to implement open-loop control because the quantity to be controlled, i.e. the output pressure of the trailer brake valve 41, is not known due to lack of a dedicated sensor. However, the output pressure of the trailer brake valve 41 can be estimated by maps or computation. Therefore, proportional control can be performed via mapped or computed control.

According to a first configuration of an embodiment, the tractor brake valve 12 and the electro-actuated valve 44 are fluidically connected in series.

In particular, the trailer brake valve 41 has a series architecture. According to the hydraulic series law, the trailer brake valve 41 is hydraulically actuated by mainly the greater of the output pressure of the tractor brake valve 12 and an output pressure of the electro-actuated valve 44. If the output pressure of the tractor brake valve 12 is greater than the output pressure of the electro-actuated valve 44, the trailer brake valve 41 is hydraulically actuated by the output pressure of the tractor brake valve 12, otherwise the trailer brake valve 41 is hydraulically actuated by the output pressure of the electro-actuated valve 44.

According to a second configuration of an embodiment, which does not fall under the invention as claimed, the tractor brake valve 12 and the electro-actuated valve 44 are fluidically connected in parallel.

In particular, the trailer brake valve 41 has a parallel architecture. According to the hydraulic parallel law, the trailer brake valve 41 is hydraulically actuated by the sum of the output pressure of the tractor brake valve 12 and an output pressure of the electro-actuated valve 44.

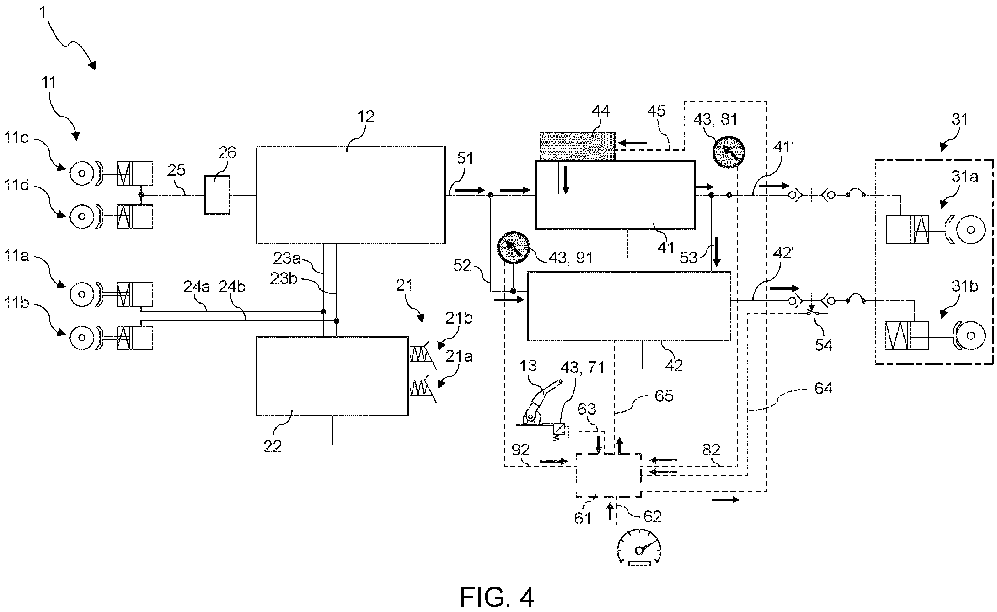

According to an embodiment (figure 4), the sensor means 43 comprise a first pressure sensor 81 configured to generate an output indicative of the output pressure of the trailer brake valve 41 and a second pressure sensor 91 configured to generate an output indicative of an output pressure of the tractor brake valve 12.

According to an embodiment, the electronic control unit 61 is configured to receive the output of the first pressure sensor 81 and the output of the second pressure sensor 91, and to control the output pressure of the trailer brake valve 41, via closed-loop control, on the basis of the output of the first pressure sensor 81 and the output of the second pressure sensor 91.

In particular, the output pressure of the tractor brake valve 12 is known, because it is detected by the second pressure sensor 91, and the output pressure of the trailer brake valve 41 is known, because it is detected by the first pressure sensor 81. The electronic control unit 61 is configured to implement closed-loop control because the quantity to be controlled, i.e. the output pressure of the trailer brake valve 41, is known due to the first pressure sensor 81. Therefore, proportional control can be performed via closed-loop control. Furthermore, since the output pressure of the tractor brake valve 12 is also known, a fine control is achievable.

According to a first configuration of an embodiment, the tractor brake valve 12 and the electro-actuated valve 44 are fluidically connected in series.

In particular, the trailer brake valve 41 has a series architecture. According to the hydraulic series law, the trailer brake valve 41 is hydraulically actuated by mainly the greater of the output pressure of the tractor brake valve 12 and an output pressure of the electro-actuated valve 44. If the output pressure of the tractor brake valve 12 is greater than the output pressure of the electro-actuated valve 44, the trailer brake valve 41 is hydraulically actuated by the output pressure of the tractor brake valve 12, otherwise the trailer brake valve 41 is hydraulically actuated by the output pressure of the electro-actuated valve 44.

According to a second configuration of an embodiment, the tractor brake valve 12 and the electro-actuated valve 44 are fluidically connected in parallel.

In particular, the trailer brake valve 41 has a parallel architecture which does not fall under the invention as claimed. According to the hydraulic parallel law, the trailer brake valve 41 is hydraulically actuated by the sum of the output pressure of the tractor brake valve 12 and an output pressure of the electro-actuated valve 44.

The invention further relates to a tractor-trailer system comprising:
- a tractor comprising tractor brakes 11, a tractor brake valve 12 of the tractor brakes 11, and a secondary brake lever 13;
- a trailer comprising trailer brakes 31; and
- the described hydraulic arrangement 1.

The invention further relates to a method for controlling the described hydraulic arrangement 1.

The method comprises the steps of:
- generating, by the sensor means 43, the at least one output indicative of a physical quantity dependent on an actuation of at least one of the secondary brake lever 13 and the tractor brakes 11;
- generating the control signal 45 dependent on the at least one output of the sensor means 43; and
- proportionally actuating the trailer brake valve 41, by the proportional valve 44, on the basis of the control signal 45.

Preferably, the at least one output of the sensor means 43 is received by the electronic control unit 61, the control signal 45 is generated by the electronic control unit 61 and provided to the proportional valve 44 so as to proportionally actuate the trailer brake valve 41.

Conveniently, the at least one output of the sensor means 43 is the output of the proportional sensor 71 indicative of an amount of actuation of the secondary brake lever 13, i.e. the signal 63, and/or the output of the first pressure sensor 81 indicative of the output pressure of the trailer brake valve 41, i.e. the signal 82, and/or the output of the second pressure sensor 91 indicative of an output pressure of the tractor brake valve 12, i.e. the signal 92.

In view of the foregoing, the advantages of the hydraulic arrangement 1 according to the invention are apparent.

The hydraulic arrangement 1 allows proportional control to be performed thanks to the sensor means 43 and the proportional valve 44 which allows the trailer brake valve 41 to be proportionally actuated on the basis of the control signal 45 which in turn depends on the at least one output of the sensor means 43.

Both open-loop control and closed-loop control can be implemented, depending on the sensor means 43. Open-loop control allows cost and installation impact to be reduced, while closed-loop control allows to achieve a fine and robust control, i.e. able to compensate for component tolerances.

The proportional valve 44 can be easily integrated in current hydraulic arrangements without impacting their current features.

The hydraulic arrangement 1 allows the trailer to be braked during autonomous driving.

The first pressure sensor 81 may be replaced by a sensor on the first trailer brakes 31a, e.g. a linear sensor or a force sensor, whose output is then converted to a pressure, e.g. via maps, and/or the second pressure sensor 91 may be replaced by a sensor on the brake pedals 21, e.g. an angular sensor or a linear sensor, whose output is then converted to a pressure, e.g. via maps.

## Claims

1. Hydraulic arrangement (1) for a tractor-trailer system comprising a tractor and a trailer,
the tractor comprising tractor brakes (11), a tractor brake valve (12) of the tractor brakes (11), and a secondary brake lever (13),
the trailer comprising trailer brakes (31),
the hydraulic arrangement (1) comprising:
- a trailer brake valve (41) fluidically interposed between the tractor brake valve (12) and a control line (41') of the trailer brakes (31);
- a safety valve (42) fluidically interposed between the tractor brake valve (12) and a supplementary line (42') of the trailer brakes (31);
- sensor means (43) configured to generate at least one output indicative of a physical quantity dependent on an actuation of at least one of the secondary brake lever (13) and the tractor brakes (11); and
- a proportional valve (44) configured to proportionally actuate the trailer brake valve (41) on the basis of a control signal (45) dependent on the at least one output of the sensor means (43);
wherein the proportional valve (44) is an electro-actuated valve, the hydraulic arrangement (1) comprises an electronic control unit (61) configured to provide the control signal (45) to the electro-actuated valve (44) so as to control an output pressure of the trailer brake valve (41), and
wherein the sensor means (43) comprise a first pressure sensor (81) configured to generate an output indicative of the output pressure of the trailer brake valve (41),
said hydraulic arrangement is **characterized in that** the tractor brake valve (12) and the electro-actuated valve (44) are fluidically connected in series, wherein the electronic control unit (61) is configured to receive the output of the first pressure sensor (81) and to control the output pressure of the trailer brake valve (41), via closed-loop control, on the basis of the output of the first pressure sensor (81).

2. Hydraulic arrangement as claimed in claim 1, wherein the sensor means (43) comprise a proportional sensor (71) configured to generate an output indicative of an amount of actuation of the secondary brake lever (13).

3. Hydraulic arrangement as claimed in claim 1 or 2, wherein the sensor means (43) comprise a second pressure sensor (91) configured to generate an output indicative of an output pressure of the tractor brake valve (12).

4. Hydraulic arrangement as claimed in claim 3, wherein the electronic control unit (61) is configured to receive the output of the second pressure sensor (91) and to control the output pressure of the trailer brake valve (41), via open-loop control, on the basis of the output of the second pressure sensor (91).

5. Hydraulic arrangement as claimed in claim 1 or 2, wherein the sensor means (43) comprise a second pressure sensor (91) configured to generate an output indicative of an output pressure of the tractor brake valve (12).

6. Hydraulic arrangement as claimed in claim 5, wherein
the electronic control unit (61) is configured to receive the output of the first pressure sensor (81) and the output of the second pressure sensor (91), and to control the output pressure of the trailer brake valve (41), via closed-loop control, on the basis of the output of the first pressure sensor (81) and the output of the second pressure sensor (91).

7. Tractor-trailer system comprising:
- a tractor comprising tractor brakes (11), a tractor brake valve (12) of the tractor brakes (11), and a secondary brake lever (13);
- a trailer comprising trailer brakes (31); and
- a hydraulic arrangement (1) as claimed in any of the preceding claims.

8. Method for controlling a hydraulic arrangement (1) as claimed in any of claims 1 to 6, comprising the steps of:
- generating, by the sensor means (43), the at least one output indicative of a physical quantity dependent on an actuation of at least one of the secondary brake lever (13) and the tractor brakes (11);
- generating the control signal (45) dependent on the at least one output of the sensor means (43); and
- proportionally actuating the trailer brake valve (41), by the proportional valve (44), on the basis of the control signal (45).

## Patentansprüche

1. Hydraulikanordnung (1) für ein Lastzugsystem, umfassend eine Zugmaschine und einen Anhänger,
wobei die Zugmaschine Zugmaschinenbremsen (11), ein Zugmaschinenbremsventil (12) der Zugmaschinenbremsen (11) und einen sekundären Bremshebel (13) umfasst,
wobei der Anhänger Anhängerbremsen (31) umfasst,
wobei die Hydraulikanordnung (1) umfasst:
- ein Anhängerbremsventil (41), das fluidisch zwischen dem Zugmaschinenbremsventil (12) und einer Steuerleitung (41') der Anhängerbremsen (31) angeordnet ist;
- ein Sicherheitsventil (42), das fluidisch zwischen dem Zugmaschinenbremsventil (12) und einer Zusatzleitung (42') der Anhängerbremsen (31) angeordnet ist;
- Sensormittel (43), die konfiguriert sind, um mindestens eine Ausgabe zu erzeugen, die eine physikalische Größe anzeigt, die von einer Betätigung von mindestens einem des sekundären Bremshebels (13) und der Zugmaschinenbremsen (11) abhängig ist; und
- ein Proportionalventil (44), das konfiguriert ist, um das Anhängerbremsventil (41) auf der Grundlage eines Steuersignals (45), das von der mindestens einen Ausgabe der Sensormittel (43) abhängig ist, proportional zu betätigen;
wobei das Proportionalventil (44) ein elektrobetätigtes Ventil ist, die Hydraulikanordnung (1) eine elektronische Steuereinheit (61) umfasst, die konfiguriert ist, um das Steuersignal (45) an das elektrobetätigte Ventil (44) bereitzustellen, um einen Ausgangsdruck des Anhängerbremsventils (41) zu steuern, und
wobei die Sensormittel (43) einen ersten Drucksensor (81) umfassen, der konfiguriert ist, um eine Ausgabe zu erzeugen, die den Ausgangsdruck des Anhängerbremsventils (41) anzeigt, wobei die Hydraulikanordnung **dadurch gekennzeichnet ist, dass** das Zugmaschinenbremsventil (12) und das elektrobetätigte Ventil (44) fluidisch in Reihe geschaltet sind, wobei die elektronische Steuerungseinheit (61) konfiguriert ist, um die Ausgabe des ersten Drucksensors (81) zu empfangen und den Ausgangsdruck des Anhängerbremsventils (41) über einen geschlossenen Regelkreis auf der Grundlage der Ausgabe des ersten Drucksensors (81) zu steuern.

2. Hydraulikanordnung nach Anspruch 1, wobei die Sensormittel (43) einen Proportionalsensor (71) umfassen, der konfiguriert ist, um eine Ausgabe zu erzeugen, die ein Ausmaß der Betätigung des sekundären Bremshebels (13) anzeigt.

3. Hydraulikanordnung nach Anspruch 1 oder 2, wobei die Sensormittel (43) einen zweiten Drucksensor (91) umfassen, der konfiguriert ist, um eine Ausgabe zu erzeugen, die einen Ausgangsdruck des Zugmaschinenbremsventils (12) anzeigt.

4. Hydraulikanordnung nach Anspruch 3, wobei die elektronische Steuereinheit (61) konfiguriert ist, um die Ausgabe des zweiten Drucksensors (91) zu empfangen und den Ausgangsdruck des Anhängerbremsventils (41) mittels eines offenen Regelkreises auf der Grundlage der Ausgabe des zweiten Drucksensors (91) zu steuern.

5. Hydraulikanordnung nach Anspruch 1 oder 2,
wobei die Sensormittel (43) einen zweiten Drucksensor (91) umfassen, der konfiguriert ist, um eine Ausgabe zu erzeugen, die einen Ausgangsdruck des Zugmaschinenbremsventils (12) anzeigt.

6. Hydraulikanordnung nach Anspruch 5, wobei
die elektronische Steuereinheit (61) konfiguriert ist, um die Ausgabe des ersten Drucksensors (81) und die Ausgabe des zweiten Drucksensors (91) zu empfangen und den Ausgangsdruck des Anhängerbremsventils (41) über einen geschlossenen Regelkreis auf der Grundlage der Ausgabe des ersten Drucksensors (81) und der Ausgabe des zweiten Drucksensors (91) zu steuern.

7. Lastzugsystem, umfassend:
- eine Zugmaschine, umfassend Zugmaschinenbremsen (11), ein Zugmaschinenbremsventil (12) der Zugmaschinenbremsen (11) und einen sekundären Bremshebel (13);
- einen Anhänger, umfassend Anhängerbremsen (31); und
- eine Hydraulikanordnung (1) nach einem der vorstehenden Ansprüche.

8. Verfahren zum Steuern einer Hydraulikanordnung (1) nach einem der Ansprüche 1 bis 6, umfassend die Schritte:
- Erzeugen, durch die Sensormittel (43), der mindestens einen Ausgabe, die eine physikalische Größe anzeigt, die von einer Betätigung von mindestens einem des sekundären Bremshebels (13) und der Zugmaschinenbremsen (11) abhängig ist;
- Erzeugen des Steuersignals (45) in Abhängigkeit von der mindestens einen Ausgabe der Sensormittel (43) und
- proportionales Betätigen des Anhängerbremsventils (41) durch das Proportionalventil (44) auf der Grundlage des Steuersignals (45).

## Revendications

1. Agencement hydraulique (1) pour un système de tracteur-remorque comprenant un tracteur et une remorque,
le tracteur comprenant des freins de tracteur (11), une soupape de frein de tracteur (12) des freins de tracteur (11), et un levier de frein secondaire (13),
la remorque comprenant des freins de remorque (31),
l'agencement hydraulique (1) comprenant :
- une soupape de frein de remorque (41) interposée de manière fluidique entre la soupape de frein de tracteur (12) et une ligne de commande (41') des freins de remorque (31) ;
- une soupape de sûreté (42) interposée de manière fluidique entre la soupape de frein de tracteur (12) et une ligne supplémentaire (42') des freins de remorque (31) ;
- des moyens capteurs (43) configurés pour générer au moins une sortie indiquant une grandeur physique dépendant d'un actionnement d'au moins l'un parmi le levier de frein secondaire (13) et les freins de tracteur (11) ; et
- une soupape proportionnelle (44) conçue pour actionner proportionnellement la soupape de frein de remorque (41) en fonction d'un signal de commande (45) dépendant de l'au moins une sortie des moyens capteurs (43) ;
dans lequel la soupape proportionnelle (44) est une soupape à actionnement électrique, l'agencement hydraulique (1) comprend une unité de commande électronique (61) configurée pour fournir le signal de commande (45) à la soupape à actionnement électrique (44) afin de commander une pression de sortie de la soupape de frein de remorque (41), et
dans lequel les moyens capteurs (43) comprennent un premier capteur de pression (81) configuré pour générer une sortie indiquant la pression de sortie de la soupape de frein de remorque (41), ledit agencement hydraulique est **caractérisé en ce que** la soupape de frein de tracteur (12) et la soupape à actionnement électrique (44) sont connectées en série de manière fluidique, dans lequel l'unité de commande électronique (61) est configurée pour recevoir la sortie du premier capteur de pression (81) et pour commander la pression de sortie de la soupape de frein de remorque (41), par l'intermédiaire d'une commande en boucle fermée, en fonction de la sortie du premier capteur de pression (81).

2. Agencement hydraulique selon la revendication 1, dans lequel les moyens capteurs (43) comprennent un capteur proportionnel (71) configuré pour générer une sortie indiquant un niveau d'actionnement du levier de frein secondaire (13).

3. Agencement hydraulique selon la revendication 1 ou 2, dans lequel les moyens capteurs (43) comprennent un second capteur de pression (91) configuré pour générer une sortie indiquant une pression de sortie de la soupape de frein de tracteur (12).

4. Agencement hydraulique selon la revendication 3, dans lequel l'unité de commande électronique (61) est configurée pour recevoir la sortie du second capteur de pression (91) et pour commander la pression de sortie de la soupape de frein de remorque (41), par l'intermédiaire d'une commande en boucle ouverte, en fonction de la sortie du second capteur de pression (91).

5. Agencement hydraulique selon la revendication 1 ou 2,
dans lequel les moyens capteurs (43) comprennent un second capteur de pression (91) configuré pour générer une sortie indiquant une pression de sortie de la soupape de frein de tracteur (12).

6. Agencement hydraulique selon la revendication 5, dans lequel
l'unité de commande électronique (61) est configurée pour recevoir la sortie du premier capteur de pression (81) et la sortie du second capteur de pression (91), et pour commander la pression de sortie de la soupape de frein de remorque (41), par l'intermédiaire d'une commande en boucle fermée, en fonction de la sortie du premier capteur de pression (81) et de la sortie du second capteur de pression (91).

7. Système de tracteur-remorque comprenant :
- un tracteur comprenant des freins de tracteur (11), une soupape de frein de tracteur (12) des freins de tracteur (11) et un levier de frein secondaire (13) ;
- une remorque comprenant des freins de remorque (31) ; et
- un agencement hydraulique (1) selon l'une quelconque des revendications précédentes.

8. Procédé pour la commande d'un agencement hydraulique (1) selon l'une quelconque des revendications 1 à 6, comprenant les étapes consistant à :
- générer, par les moyens capteurs (43), l'au moins une sortie indiquant une grandeur physique dépendant d'un actionnement d'au moins l'un parmi le levier de frein secondaire (13) et les freins de tracteur (11) ;
- générer le signal de commande (45) en fonction de l'au moins une sortie des moyens capteurs (43) ; et
- actionner proportionnellement la soupape de frein de remorque (41), par la soupape proportionnelle (44), sur la base du signal de commande (45).
